# EUROPEAN PATENT SPECIFICATION

(11) **EP 3 300 379 B1**
(45) Date of publication and mention of the grant of the patent: **25.11.2020**
(21) Application number: 17192295.8
(22) Date of filing: 21.09.2017
(51) Int. Cl.: H04N 21/422, H04N 21/4363, H04N 21/658

(54) **DISPLAY DEVICE AND SOURCE DEVICE CONTROLLING METHOD THEREOF**
ANZEIGEVORRICHTUNG UND QUELLENVORRICHTUNGSTEUERUNGSVERFAHREN DAFÜR
DISPOSITIF D'AFFICHAGE ET PROCÉDÉ DE COMMANDE DE DISPOSITIF SOURCE CORRESPONDANT

(30) Priority: 26.09.2016 KR 20160122948
(43) Date of publication of application: 28.03.2018
(73) Proprietor: Samsung Electronics Co., Ltd., Gyeonggi-do 16677 (KR)
(72) Inventor: BAE, Ji Hyun, 18394 Gyeonggi-do (KR)
(74) Representative: Appleyard Lees IP LLP

(56) References cited:
- EP-A1- 1 791 327
- EP-A2- 2 648 118
- JP-A- H09 135 406

## Description

### BACKGROUND OF THE INVENTION

### 1. Field of the Invention

Exemplary embodiments relate to a display device for receiving content from a source unit and displaying the content, and a source device controlling method thereof.

### 2. Background of the Invention

As digital technology advances, electronic products are being developed and supplied with various types of functionalities. Together with multi-functionality of electronic products, there are many products, such as smartphones, which include diverse services which are implemented in a single device.

Additionally, the progress of communication technology increases services to be provided in an interlocking manner between electronic devices. In particular, an electronic device, such as a television (TV), may be connected with a content providing device, such as a smartphone, a set-top box, a game console, or the like, to provide users with a variety of content that is received from the content providing device.

A user is required to input a control instruction respectively to a display device and a source device in order to turn on/off power of the display device and the source device.

EP2648118 discloses a TV that communicates with a remote control and a smart phone via a NFC-based communication unit. The TV is powered on in accordance with a power on/off state of the smart phone.

### SUMMARY OF THE INVENTION

Aspects of the present disclosure are presented to address at least the above-mentioned problems and/or disadvantages and to provide at least the advantages described below. Accordingly, an aspect of the present disclosure is to provide a display device that is capable of turning on a display device and a source device at the same time via a one-time operation, and a source device controlling method of the display device.

According to the present invention there is provided a display device and a method of controlling the display device as set forth in the appended claims. Other features of the invention will be apparent from the dependent claims, and the description which follows.

In accordance with an aspect of one or more exemplary embodiments, a display device includes a first communication interface configured to be communicatively connected with a source device, a second communication interface that communicates with a remote control device, and a processor configured to identify whether a first signal is received from the source device when a power-on signal of the display device is received, to identify whether the first signal includes a predetermined image when the first signal is received from the source device, and to transmit a power-on request signal of the source device when the first signal is not received from the source device or when the first signal includes the predetermined image.

In accordance with another aspect of one or more exemplary embodiments, a source device controlling method of a display device includes receiving a power-on signal of the display device, identifying whether a first signal is received from a source device, identifying whether the first signal includes a predetermined image when the first signal is received from the source device, and transmitting a power-on request signal of the source device when the first signal is not received from the source device or when the first signal includes the predetermined image.

Other aspects, advantages, and salient features will become apparent to persons having ordinary skill in the art from the following detailed description, which, taken in conjunction with the annexed drawings, discloses various exemplary embodiments.

### BRIEF DESCRIPTION OF THE DRAWINGS

The above and other aspects, features, and advantages of certain exemplary embodiments will be more apparent from the following description taken in conjunction with the accompanying drawings, in which:
FIG. 1 is a diagram illustrating a display system, according to various exemplary embodiments;
FIG. 2 is a block diagram illustrating a configuration of a display device, according to an exemplary embodiment;
FIG. 3 is a timing diagram illustrating signals transmitted/received between a display device and a source device, according to various exemplary embodiments; and
FIG. 4 is a flow chart illustrating a power controlling method of a display device, according to various exemplary embodiments.

Throughout the drawings, it should be noted that like reference numbers are used to depict the same or similar elements, features, and structures.

### DETAILED DESCRIPTION OF EMBODIMENTS OF THE PRESENT INVENTION

Hereinafter, various exemplary embodiments may be described with reference to accompanying drawings. Accordingly, those of ordinary skill in the art will recognize that modifications, equivalents, and/or alternatives with respect to the various exemplary embodiments described herein can be variously made without departing from the scope of the present inventive concept. With regard to description of drawings, similar elements may be marked by similar reference numerals.

In the present disclosure, the expressions "have", "may have", "include" and "comprise", or "may include" and "may comprise" used herein indicate existence of corresponding features (e.g., elements such as numeric values, functions, operations, or components) but do not exclude a presence of additional features.

In the present disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like as used in the present disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element, or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of". In particular, the term "configured to" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in the present disclosure are used to describe exemplary embodiments and are not intended to limit the scope of another exemplary embodiment. The terms of a singular form may include plural forms unless otherwise specified. All the terms used herein, which include technical or scientific terms, may have the same meaning that is generally understood by a person having ordinary skill in the art. It will be further understood that terms, which are defined in a dictionary and commonly used, should also be interpreted as being customary in the relevant related art and not in an idealized or overly formal unless expressly so defined in various exemplary embodiments of the present disclosure. In some cases, even if terms are terms which are defined in the present disclosure, they may not be interpreted to exclude exemplary embodiments of the present disclosure.

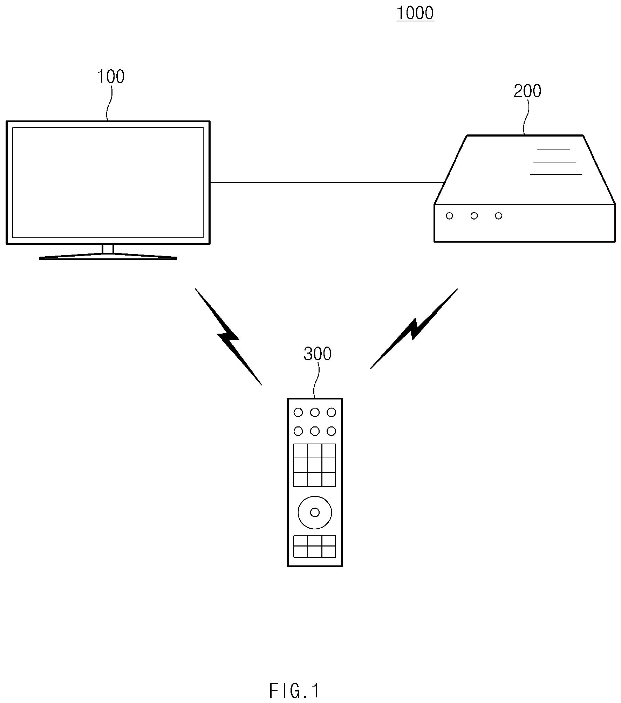

FIG. 1 is a diagram illustrating a display system, according to various exemplary embodiments.

Referring to FIG. 1, a display system 1000 may include a display device 100, a source device 200, and a remote control device 300.

According to an exemplary embodiment, the display device 100 may receive an image from an external device. For example, the display device 100 may be connected with the source device 200 via a first communication interface in order to receive content from the source device 200. The content may be, for example, content that includes image data such as movie, drama, news, game, or the like.

According to an exemplary embodiment, the display device 100 may communicate with the remote control device 300. For example, the display device 100 may transmit or receive a control signal to or from the remote control device 300 via a second communication interface.

According to an exemplary embodiment, the display device 100 may be implemented in any of various types which are capable of receiving content from an external device, such as a television (TV), a desk top computer, a notebook personal computer (PC), a smart phone, a tablet PC, a monitor, or the like, and displaying the content.

According to an exemplary embodiment, the source device 200 may transmit content, which is received from an external device or stored in an internal (or external) recording medium, to the display device 100. For example, the source device 200 may receive broadcasting content from a broadcasting station via a broadcasting network, or may receive web content from a web server via an Internet network. The source device 200 may play content stored in a recording medium and may transmit an image of the played content to the display device 100. The recording medium may include, for example, any of a Compact Disk (CD), a Digital Versatile Disk (DVD), a hard disk, a Blu-ray disk, a memory card, a universal serial bus (USB) memory, or the like.

According to an exemplary embodiment, the source device 200 may be implemented in any of various devices, such as a set-top box, a game console (e.g., Xbox™, PlayStation™, or the like), a smartphone, a tablet PC, and the like, which are capable of receiving or storing content and transmitting content to the display device 100.

According to an exemplary embodiment, the remote control device 300 may receive a user input and may transmit a control signal, which corresponds to the user input, to the display device 100 or the source device 200. The remote control device 300 may communicate with the display device 100 and the source device 200 via a wired or wireless interface. For example, the remote control device 300 may communicate via a wireless communication interface such as Bluetooth, near-field communication (NFC), or an infrared (IR) transmitter/receiver. According to an exemplary embodiment, the remote control device 300 may include at least one of a button, a touch panel, a motion recognition sensor, and/or a voice recognition sensor.

According to an exemplary embodiment, the remote control device 300 may transmit a control signal for controlling the display device 100 and for controlling a peripheral device (e.g., the source device 200) connected with the display device 100. According to an exemplary embodiment, the remote control device 300 may be a Multi-Brand Remote controller (MBR). For example, the remote control device 300 may store control signals of a plurality of the source devices 200. If identification information of the source device 200 which is selected as a current input source is received from the display device 100, the remote control device 300 may perform a connection operation with the source device 200 that corresponds to the received identification information, or may transmit a control signal to the source device 200 that corresponds to the received identification information.

According to an exemplary embodiment, the remote control device 300 may be a user terminal such as a smartphone, a tablet PC, or the like. For example, a user is able to control the display device 100 or the source device 200 by using an application installed in the remote control device 300. According to an exemplary embodiment, the remote control device 300 may be a home network device. For example, the remote control device 300 may be another device connected to a server or a home network to which the display device 100 and the source device 200 are connected.

According to an exemplary embodiment, in the display system 1000, the source device 200 may be powered on when the display device 100 is powered on. If a power-on signal is received from the remote control device 300 or an input module (e.g., a button, a touch panel, or the like), the display device 100 may determine (or identify) whether the source device 200 is powered on. If the source device 200 is power off (or in a standby state), the display device 100 may force the source device 200 to be powered on via a first communication interface or the remote control device 300.

According to an exemplary embodiment, the display device 100 may determine (or identify) whether the source device 200 is powered on based on whether a particular predetermined signal is received from the source device 200. Even in a state where the source device 200 is powered off, a case of transmitting a predetermined signal may occur. Accordingly, although the source device 200 is practically powered off, the display device 100 may determine that an image is being normally received in a state that the source device 200 is powered on. According to various exemplary embodiments, although a predetermined signal is received from the source device 200, the display device 100 may precisely determine whether the source device 200 is powered on or not by analyzing an image included in the predetermined signal.

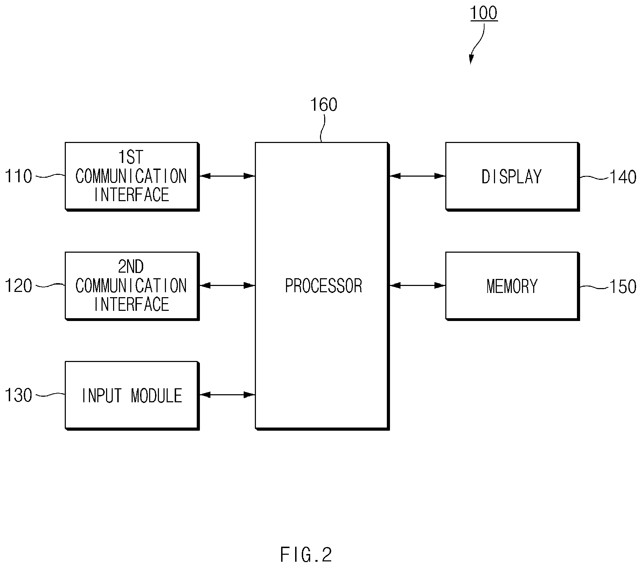

FIG. 2 is a block diagram illustrating a configuration of a display device, according to an exemplary embodiment.

Referring to FIG. 2, the display device 100 may include a first communication interface (or a first communication circuit) 110, a second communication interface (or a second communication circuit) 120, an input module (or an input interface) 130, a display 140, a memory 150, and a processor 160.

According to an exemplary embodiment, the first communication interface 110 may communicate with the source device 200. For example, the first communication interface 110 may be connected with the source device 200 in a wired or wireless manner in order to receive content from the source device 200. The first communication interface 110 may include, for example, at least one of wired interfaces, such as High Definition Multimedia Interface (HDMI) interface, Digital Video (Visual) Interface (DVI) interface, and Display Port (DP) interface, and wireless interfaces such as Bluetooth interface, Near Field Communication (NFC) interface, Wireless Fidelity (Wi-Fi) interface, and Infrared (IR) interface.

According to an exemplary embodiment, the second communication interface 120 may communicate with the remote control device 300. For example, the second communication interface 120 may be connected with the remote control device 300 in a wired or wireless manner in order to transmit or receive a control signal (e.g., power-on signal). The second communication interface 120 may include, for example, any of a Bluetooth interface, a Near Field Communication (NFC) interface, a Wireless Fidelity (Wi-Fi) interface, and an Infrared (IR) interface.

According to an exemplary embodiment, the input module 130 may receive a user input. According to an exemplary embodiment, the input module 130 may receive a user input which forces the display device 100 to be powered on. According to an exemplary embodiment, the input module 130 may include at least one of a touch sensor that is configured to sense a user's touch operation, a motion recognition sensor that is configured to recognize a user's motion, a voice recognition sensor that is configured to recognize a user's voice, and a button.

According to an exemplary embodiment, the display 140 may display an image received from a source device. The display 140 may include, for example, any of a Liquid Crystal Diode (LCD), a Light-Emitting Diode (LED) display, and/or an Organic LED (OLED) display.

According to an exemplary embodiment, the memory 150 may store a reference time. For example, the memory 150 may store a first reference time for determining whether a predetermined signal is received from the source device 200 after an initializing signal is transmitted to the source device 200. As another example, the memory 150 may store a second reference time for determining whether a predetermined signal is received from the source device 200 after a power-on request signal is transmitted. According to an exemplary embodiment, the reference time stored in the memory 150 may be updated based on a learning result from the source device 200.

According to an exemplary embodiment, the processor 160 may control overall operations of the display device 100. For example, the processor 160 may control power of the source device 200, according to various exemplary embodiments, by controlling each of the first communication interface 110, the second communication interface 120, the input module 130, the display 140, and the memory 150. According to an exemplary embodiment, the display device 100 may include at least one processor 160. For example, the display device 100 may include a plurality of processors 160, each of which is configured to perform at least one function. According to an exemplary embodiment, the processor 140 may be implemented with a System-on-Chip (SoC) including a Central Processing Unit (CPU), a Graphic Processing Unit (GPU), a memory, or the like.

According to an exemplary embodiment, the processor 160 may receive a power-on signal of the display device 100. For example, the processor 160 may receive a power-on signal from the remote control device 300 via the second communication interface 120. As another example, the processor 160 may receive a power-on signal from the input module 130. According to an exemplary embodiment, if a power-on signal of the display device 100 is received, the processor 160 may cause the display device 100 to be powered on.

According to an exemplary embodiment, if a power-on signal of the display device 100 is received, the processor 160 may determine whether a predetermined signal is received from the source device 200. The predetermined signal may be, for example, a signal that includes image data. For example, in the case that the display device 100 and the source device 200 are connected to each other via a HDMI interface or a DVI interface, the predetermined signal may be a Transition Minimized Differential Signaling (TMDS) signal (e.g., TMDS clock signal and/or TMDS data signal).

According to an exemplary embodiment, if a power-on signal is received, the processor 160 may transmit an initializing signal. The initializing signal may be, for example, a Hot Plug Detect (HPD) signal. According to an exemplary embodiment, the processor 160 may determine whether a predetermined signal is received from the source device 200 before the first reference time elapses after the initializing signal is transmitted.

According to an exemplary embodiment, if a specified signal is not received in the first reference time after the initializing signal is transmitted, the processor 160 may determine that the source device 200 is powered off and then may transmit a power-on request signal of the source device 200. For example, in the case that the display device 100 and the source device 200 are connected each other via a HDMI interface, the processor 160 may use a HDMI Consumer Electronics Control (HDMI CEC) function to transmit a power-on request signal (e.g., control signal that causes the source device 200 to be powered on) of the source device 200. As another example, the processor 160 may transmit a power-on request signal (e.g., a control signal turning on power of the source device 200, or a control signal instructing transmission of the control signal for turning on power of the source device 200 to the source device 200) of the source device 200 to the remote control device 300 via the second communication interface 120. According to an exemplary embodiment, the remote control device 300 may transmit a power-on request signal to the source device 200 in response to a power-on request of the display device 100. According to an exemplary embodiment, the processor 160 may transmit a power-on request signal that includes identification information that relates to the source device 200 which is selected as a current input source to the remote control device 300. According to an exemplary embodiment, the remote control device 300 may recognize identification information included in a power-on request signal, and may transmit the power-on request signal to the source device 200 that corresponds to the identification information. As another example, the remote control device 300 may transmit a power-on request signal of the source device 200 that corresponds to identification information.

According to an exemplary embodiment, if a predetermined signal is received within the first reference time period after an initializing signal is transmitted, the processor 160 may determine whether the received signal includes a predetermined image (or whether the display 140 is displaying the predetermined image). For example, a case may occur in which the source device 200 transmits a specified signal even in a power-off state. A signal transmitted when the source device 200 is powered off may not include a normal image, for example, may include a full-black image, or may not include image data. Accordingly, the processor 160 may determine whether a signal received from the source device 200 includes a full-black image or does not include image data.

According to an exemplary embodiment, the processor 160 may monitor a brightness value of an image included in a received signal. According to an exemplary embodiment, if a brightness value is smaller than a reference value for a predetermined amount of time (e.g., 3, 5, or 10 seconds), the processor 160 may determine that a received signal includes a predetermined image. For example, the processor 160 may monitor a value of Y component which represents a brightness value in an YCbCr (or YPbPr) color format. The reference value may be determined based on black color, or otherwise may be determined in consideration of any of a signal detecting error, a signal detecting position, and/or characteristics of the display device 100. If a signal received from the source device 200 includes a full black image or does not include image data, a value of Y component may be smaller than the reference value.

According to an exemplary embodiment, the processor 160 may capture an image included in a received signal and identify pixel values (or subpixel values) of pixels included in the captured image. According to an exemplary embodiment, if pixel values of pixels are smaller than a reference value, the processor 160 may determine that a received signal includes a specified image. The reference value may be determined, for example, based on black color, or may make a determination in consideration of any of a color format, characteristics of the display device 100, an image capturing position, or an image capturing position error. For example, if a color format of a captured image is the RGB color format, the processor 160 may determine whether values of Red, Green, and Blue components are respectively smaller than the reference value (e.g., 10). As another example, if a color format of a captured image is the YCbCr color format, the processor 160 may determine whether a value of Y is smaller than the reference value (e.g., 10). If a signal received from the source device 200 includes a full black image or does not include image data, pixel values of the captured image may be smaller than the reference value.

According to an exemplary embodiment, when capturing the image included in the received signal, the processor 160 may capture the image in units of frame. For example, the processor 160 may capture image data included in one image frame, and identify pixel values included in the captured image data. According to another exemplary embodiment, the processor 160 may capture only a part of a frame when capturing an image included in a received signal. For example, the processor 160 may capture a part of image data (e.g., a half of an image frame) included in one image frame, and identify pixels values included in the captured image data.

According to an exemplary embodiment, the processor 160 may capture an image, which is included in a received signal, during a specified time period (e.g., each of 1/3 or 1/5 seconds). According to an exemplary embodiment, if pixel values of a plurality of images captured for a specified amount of time (e.g., 3 or 5 seconds) are smaller than a reference value, a predetermined signal may be determined as including a specified image.

According to an exemplary embodiment, the processor 160 may monitor a driving signal (e.g., display panel driving signal or backlight driving signal) of the display 140. According to an exemplary embodiment, the display 140 may include a display panel and a panel driving module (e.g., Display Diver IC; DDI). A display driving module may transfer a driving signal, which corresponds to pixel values of pixels included in an image frame, to the display panel. According to an exemplary embodiment, the processor 160 may monitor a driving signal of the display 140 and may determine that a received signal includes a specified image if a level of the driving signal of the display 140 is equal to or smaller than a reference value. For example, if all pixels of a display panel are turned off for a predetermined amount of time, or if all backlights of an LCD are turned off for a predetermined amount of time, the processor 160 may determine that a received signal includes a specified image.

According to an exemplary embodiment, the processor 160 may determine whether a received signal includes a specified image by using a plurality of methods from among the aforementioned methods. According to an exemplary embodiment, if it is determined by at least one of the plurality of methods that a particular signal includes a specified image, the processor 160 may transmit a power-on request signal of the source device 200. According to an exemplary embodiment, if it is determined by the plurality of methods that a particular signal includes a specified image, the processor 160 may transmit a power-on request signal of the source device 200.

According to an exemplary embodiment, if a received signal does include a specified image, the processor 160 may determine that the source device 200 is powered on. According to an exemplary embodiment, if a received signal includes a specified image, the processor 160 may determine that the source device 200 is powered off and may transmit a power-on request signal of the source device 200. According to an exemplary embodiment, the processor 160 may transmit a power-on request signal after a lapse of a first reference time after an initializing signal is transmitted. For example, the processor 160 may wait for transmission of a power-on request signal before a lapse of a first reference time after an initializing signal is transmitted even though it is determined that a received signal includes a specified image.

According to an exemplary embodiment, the processor 160 may determine that a particular signal is received from the source device 200 in a second reference time after a power-on request signal is transmitted. According to an exemplary embodiment, if a particular signal is not received in the second reference time after a power-on request signal is transmitted, the processor 160 may display a User Interface (Ul), which is associated with a status of the source device 200, on the display 140. For example, the processor 160 may display a Ul which informs that the source device 200 is powered off, on the display 140. As another example, the processor 160 may display a UI which requests check for a power cable of the source device 200 or check for a connection status of a wired communication cable, on the display 140.

According to an exemplary embodiment, if a particular signal is received in the second reference time after a power-on request signal is transmitted, the processor 160 may determine whether the received signal includes a specified image (or whether the specified image is displayed on the display 140). According to an exemplary embodiment, if a received signal does include a specified image, the processor 160 may determine that the source device 200 is powered on. According to an exemplary embodiment, if a received signal includes a specified image, the processor 160 may display a UI which is associated with a status of the source device 200, on the display 200.

According to an exemplary embodiment, the processor 160 may update (or reset) a reference time (e.g., first reference time or second reference time). According to an exemplary embodiment, if a predetermined signal is received in a first reference time after an initializing signal is transmitted, the processor 160 may update the first reference time based on an amount of time that elapses until the reception of the predetermined signal after the initializing signal is transmitted. For example, the processor 160 may update the first reference time by adding a predetermined supplementary amount of time to the amount of time that elapses until the specified signal is received after the initializing signal is transmitted. According to an exemplary embodiment, if a predetermined signal is received in a second reference time after a power-on request signal is transmitted, the processor 160 may update the second reference time based on an amount of time that elapses until the reception of the predetermined signal after the power-on request signal is transmitted. For example, the processor 160 may update the second reference time by adding a predetermined supplementary amount of time to the amount of time that elapses until the predetermined signal is received after the power-on request signal is transmitted. According to an exemplary embodiment, the processor 160 may update the first reference time or the second reference time when a predetermined signal does not include a specified image.

According to an exemplary embodiment, the first communication interface 110 may be connected with a plurality of source devices 200. For example, a first HDMI interface may be connected with a set-top box and a second HDMI interface may be connected with a game console. According to an exemplary embodiment, the processor 160 may determine whether the source device 200 which is selected as a current input source is powered on. For example, the processor 160 may determine whether an initializing signal is transmitted to the source device 200 selected as a current input source or whether a predetermined signal is received from the source device 200 selected as the current input source. According to an exemplary embodiment, the processor 160 may transmit a power-on request signal, which includes identification information that relates to the source device 200 selected as a current input source, to the remote control device 300. The remote control device 300 may identify the identification information included in the power-on request signal, and may transmit the power-on request signal to the source device 200 that corresponds to the identification information, or may transmit the power-on request signal of the source device 200 that corresponds to the identification information.

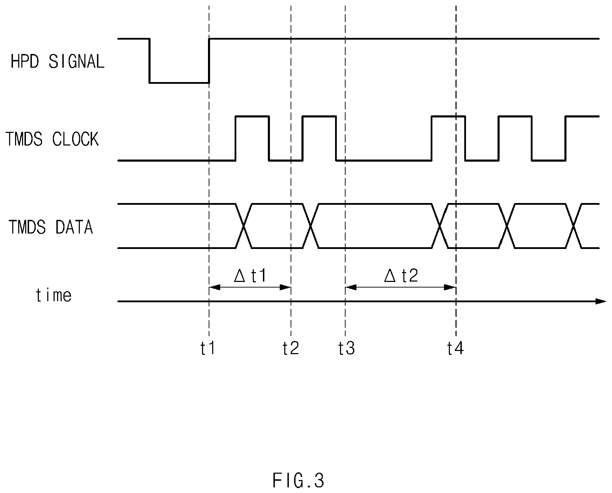

FIG. 3 is a timing diagram illustrating signals transmitted/received between a display device and a source device, according to various exemplary embodiments.

According to an exemplary embodiment, if a power-on request signal is received, the display device 100 may transmit an initializing signal (e.g., HPD signal) to the source device 200 at a first time t1. According to an exemplary embodiment, the display device 100 may transmit an HPD signal via a connector that connects to the first communication interface 110 with a wired cable. For example, in the case that the display device 100 and the source device 200 are connected to each other via an HDMI interface, the processor 160 may transmit the HPD signal through the #19 pin of the connector. The HPD signal may be, for example, a low active signal. As another example, the HPD signal may be a high active signal. According to an exemplary embodiment, if the HPD signal is received from the display device 100 in a power-on state, the source device 200 may identify that the display device 100 is powered on and then may transmit a predetermined signal to the display device 100.

According to an exemplary embodiment, the display device 100 may determine whether a predetermined signal (e.g., TMDS signal) is received in a first reference time Δt1 after the HPD signal is transmitted. According to an exemplary embodiment, if a predetermined signal (e.g., TMDS signal) is not received in the first reference time period Δt1 after the HPD signal is transmitted, the display device 100 may request a power-on request signal from the source device 200 at a second time t2. According to an exemplary embodiment, as illustrated in FIG. 3, if a predetermined signal (e.g., TMDS signal) is received in the first reference time Δt1 after the HPD signal is transmitted, the display device 100 may determine whether the received signal includes a specified image (or whether a specified image is displayed on the display 140). According to an exemplary embodiment, if it is determined that a received signal includes a specified image, the display device 100 may transmit a power-on request signal of the source device 200 at a third time t3.

According to an exemplary embodiment, if a predetermined signal (e.g., TMDS signal) is received in a second reference time period Δt2 after a power-on request signal of the source device 200 is transmitted at a third time t3, the display device 100 may determine whether the received signal includes a specified image (or whether the specified image is displayed on the display 140). According to an exemplary embodiment, if a received signal does not include a specified image, the display device 100 may determine that the source device 200 is powered on. According to an exemplary embodiment, if a predetermined signal (e.g., TMDS signal) is not received in the second reference time period Δt2 after a power-on request signal of the source device 200 is transmitted or if the received signal includes a specified image, the display device 100 may display a UI associated with a status of the source device 200.

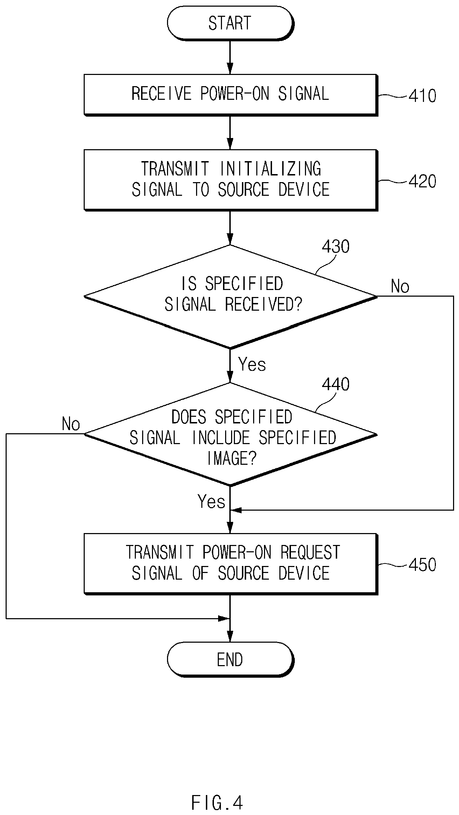

FIG. 4 is a flow chart illustrating a power controlling method of a display device, according to various exemplary embodiments.

The flowchart shown in FIG. 4 may include operations that the display device 100 processes. Therefore, even for matters omitted hereafter, the description about the display device with reference to FIGS. 1, 2, and 3 may be applicable to the flowchart shown in FIG. 4.

According to an exemplary embodiment, in operation 410, the display device 100 may receive a power-on signal. For example, the display device 100 may receive a power-on signal from the remote control device 300 for wireless communication, or may receive the power-on signal via the input module 130. According to an exemplary embodiment, if the power-on signal of the display device 100 is received, the processor 160 may cause the display device 100 to be powered on.

According to an exemplary embodiment, in operation 420, the display device 100 may transmit an initializing signal to the source device 200. The initializing signal may be, for example, a Hot Plug Detect (HPD) signal. According to an exemplary embodiment, in the case that the display device 100 is connected with a plurality of the source devices 200, an initializing signal may be transmitted to the source device 200 which is selected as a current input source.

According to an exemplary embodiment, in operation 430, the display device 100 may determine (or identify) whether a predetermined signal is received from the source device 200. According to an exemplary embodiment, the display device 100 may determine whether a predetermined signal is received from the source device 200 before the first reference time period elapses. According to an exemplary embodiment, in the case that the display device 100 is connected with a plurality of the source devices 200, the display device 100 may determine that a predetermined signal is received from the source device 200 which is selected as a current input source.

According to an exemplary embodiment, if a predetermined signal is not received from the source device 200 in the first reference time period, in operation 450, the display device 100 may transmit a power-on request signal of the source device 200. For example, the display device 100 may transmit a power-on request signal of the source device 200 to the remote control device 300 via the second communication interface 120.

According to an exemplary embodiment, when a signal is received from the source device 200 in the first reference time period, in operation 440, the display device 100 may determine (or identify) whether the received signal includes a specified image.

According to an exemplary embodiment, the display device 100 may monitor a brightness value of an image included in a received signal. According to an exemplary embodiment, if a brightness value of an image is smaller than a reference value for a predetermined amount of time, the display device 100 may determine that the received signal includes a specified image.

According to an exemplary embodiment, the display device 100 may capture an image included in a received signal and may identify pixel values (or subpixel values) of pixels included in the captured image. According to an exemplary embodiment, if the pixel values of the pixels are smaller than a reference value, the display device 100 may determine that the received signal includes a specified image. According to an exemplary embodiment, the display device 100 may capture an image, which is included in a received signal, in units of frame when capturing the image. According to an exemplary embodiment, if pixel values of a plurality of images captured for a predetermined amount of time are smaller than a reference value, the display device 100 may determine that the received signal includes a specified image.

According to an exemplary embodiment, the display device 100 may monitor a driving signal (e.g., a display panel driving signal or a backlight driving signal) of the display 140. According to an exemplary embodiment, if a level of the driving signal of the display is smaller than a reference value for a predetermined amount of time, the display device 100 may determine that a received signal includes a specified image.

According to an exemplary embodiment, if a received signal includes a specified image, in operation 450, the display device 100 may transmit a power-on request signal of the source device 200. According to an exemplary embodiment, the display device 100 may transmit a power-on request signal, which includes identification information that relates the source device 200 which is selected as a current input source, to the remote control device 300.

According to an exemplary embodiment, if a predetermined signal does not include a specified image, the display device 100 may update the first reference time based on an amount of time that elapses until the predetermined signal is received after an initializing signal is transmitted.

The term "module" as used in the present disclosure may include a unit implemented with hardware, software or firmware. For example, the term "module" may be interchangeably used with the terms "logic", "logical block", "component" and "circuit". The "module" may be an integrated component or may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various exemplary embodiments may be, for example, implemented by instructions stored in computer-readable storage media in the form of a program module. The instruction, when executed by a processor, may cause the processor to perform a function corresponding to the instruction. A non-transitory computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and an internal memory. Further, an instruction may include not only a code generated by a compiler but also a code that is executable by using an interpreter. A module or a program module according to various exemplary embodiments may include at least one of the above elements, or a part of the above elements may be omitted, or additional other elements may be further included.

Operations performed by a module, a program module, or other elements according to various exemplary embodiments may be executed sequentially, in parallel, repeatedly, or in a heuristic method. In addition, some operations may be executed in different sequences or may be omitted. Alternatively, other operations may be added.

According to various exemplary embodiments, it may be possible to enhance convenience for a user by turning on all power of a display device and a source device as a result of a one-time manipulation performed by the user.

According to various exemplary embodiments, it may be possible to turn on all power of a display device and a source device even in the case of transmitting a specified signal to the display device while the source device is powered off.

## Claims

1. A display device (100) comprising:
a first communication interface (110) configured to be communicatively connected with a source device (200);
a second communication interface (120) configured to communicate with a remote control device (300); and
a processor (160) configured to receive a first signal from the source device (200);
**characterised in that**
when a power-on signal of the display device (100) is received, the processor (160) is configured to identify whether the source device (200) is in a powered on state or a standby state by analysing the first signal against a reference value in order to determine whether the first signal includes a predetermined image;
wherein the processor (160) is configured to transmit to the source device (200) or remote control device (300) a power-on request signal of the source device (200) when the processor (160) determines the first signal includes the predetermined image,
wherein the processor (160) is further configured to capture an image included in the first signal, to identify pixel values of pixels included in the captured image, and to determine that the first signal includes the predetermined image when the pixel values of the captured image are smaller than the reference value.

2. The display device (100) of claim 1, wherein the processor (160) is further configured to monitor a brightness value of an image included in the first signal and to determine that the first signal includes the predetermined image when the brightness value is smaller than the reference value for a predetermined amount of time.

3. The display device (100) of claim 1, wherein the processor (160) is further configured to capture a plurality of images during a predetermined time period and to determine that the first signal includes the predetermined image when pixel values of at least one image from among the plurality of images are smaller than the reference value.

4. The display device (100) of claim 1, further comprising:
a display (140),
wherein the processor (160) is further configured to identify a driving signal of the display and to determine whether the first signal includes the predetermined image based on the driving signal of the display.

5. The display device (100) of claim 1, wherein the processor (160) is further configured to transmit an initializing signal to the source device when the power-on signal is received, and to identify whether the first signal is received within a reference time after the initializing signal is transmitted.

6. The display device (100) of claim 5, wherein when the first signal is received within the reference time and the first signal does not include the predetermined image, the processor is further configured to update the reference time based on an amount of time that elapses until the first signal is received after the initializing signal is transmitted.

7. The display device (100) of claim 1, wherein the first communication interface is further configured to be communicatively connected with a plurality of source devices, and wherein the processor is further configured to identify whether the first signal is received from a first source device which is selected as a current input source from among the plurality of source devices.

8. The display device (100) of claim 1, wherein the processor is further configured to transmit the power-on request signal, which includes identification information that relates to a first source device which is selected as a current input source from among a plurality of source devices, to the remote control device via the second communication interface.

9. The display device (100) of claim 1, wherein the processor is further configured to transmit the power-on request signal of the source device to the source device via the first communication interface.

10. A source device (200) controlling method of a display device (100) **,** the method comprising:
receiving a power-on signal of the display device (100);
identifying whether a source device (200) is in a powered on state or a standby state by analyzing a first signal received from the source device against a reference value in order to determine whether the first signal is a predetermined image; and
transmitting to the source device (200) or to a remote controller device (300) a power-on request signal of the source device when the processor determines the first signal includes the predetermined image,
wherein the identifying whether the first signal includes the predetermined image includes:
capturing an image included in the first signal;
identifying pixel values of pixels included in the captured image; and
determining that the first signal includes the predetermined image when the pixel values of the captured image are smaller than the reference value.

11. The method of claim 10, wherein the identifying whether the first signal includes the predetermined image includes:
monitoring a brightness value of an image included in the first signal; and
determining that the first signal includes the predetermined image when the brightness value is smaller than the reference value for a predetermined amount of time.

12. The method of claim 10, wherein the identifying whether the first signal includes the predetermined image includes:
capturing a plurality of images included in the first signal during a predetermined time period;
identifying pixel values of pixels included in each image from among the plurality of images; and
determining that the first signal includes the predetermined image when the pixel values of at least one image from among the plurality of images are smaller than the reference value.

13. The method of claim 10, wherein the identifying whether the first signal includes the predetermined image includes:
identifying a driving signal of the display device; and
determining whether the first signal includes the predetermined image based on the driving signal of the display device.

## Patentansprüche

1. Anzeigevorrichtung (100), umfassend:
eine erste Kommunikationsschnittstelle (110), die konfiguriert ist, um kommunikativ mit einer Quellvorrichtung (200) verbunden zu sein;
eine zweite Kommunikationsschnittstelle (120), die konfiguriert ist, um mit einer Fernsteuerungsvorrichtung (300) zu kommunizieren; und
einen Prozessor (160), der konfiguriert ist, um ein erstes Signal von der Quellvorrichtung (200) zu empfangen;
**dadurch gekennzeichnet, dass**
wenn ein Einschaltsignal der Anzeigevorrichtung (100) empfangen wird, der Prozessor (160) konfiguriert ist, um durch Analysieren des ersten Signals gegen einen Referenzwert zu identifizieren, ob sich die Quellvorrichtung (200) in einem eingeschalteten Zustand oder einem Standby-Zustand befindet, um zu bestimmen, ob das erste Signal ein vorbestimmtes Bild enthält;
wobei der Prozessor (160) konfiguriert ist, um ein Einschaltanforderungssignal der Quellvorrichtung (200) an die Quellvorrichtung (200) oder die Fernsteuerungsvorrichtung (300) zu übertragen, wenn der Prozessor (160) bestimmt, dass das erste Signal das vorbestimmte Bild enthält,
wobei der Prozessor (160) ferner konfiguriert ist, um ein in dem ersten Signal enthaltenes Bild zu erfassen, um Pixelwerte von Pixeln zu identifizieren, die in dem erfassten Bild enthalten sind, und um zu bestimmen, dass das erste Signal das vorbestimmte Bild enthält, wenn die Pixelwerte des erfassten Bildes kleiner als der Referenzwert sind.

2. Anzeigevorrichtung (100) nach Anspruch 1, wobei der Prozessor (160) ferner konfiguriert ist, um einen Helligkeitswert eines in dem ersten Signal enthaltenen Bildes zu überwachen, und um zu bestimmen, dass das erste Signal das vorbestimmte Bild enthält, wenn der Helligkeitswert für eine vorbestimmte Zeitdauer kleiner als der Referenzwert ist.

3. Anzeigevorrichtung (100) nach Anspruch 1, wobei der Prozessor (160) ferner konfiguriert ist, um eine Vielzahl von Bildern während eines vorbestimmten Zeitraums zu erfassen, und um zu bestimmen, dass das erste Signal das vorbestimmte Bild enthält, wenn Pixelwerte von mindestens einem Bild aus der Vielzahl von Bildern kleiner als der Referenzwert sind.

4. Anzeigevorrichtung (100) nach Anspruch 1, ferner umfassend:
eine Anzeige (140),
wobei der Prozessor (160) ferner konfiguriert ist, um ein Ansteuersignal der Anzeige zu identifizieren, und zu bestimmen, ob das erste Signal das vorbestimmte Bild enthält, basierend auf dem Ansteuersignal der Anzeige.

5. Anzeigevorrichtung (100) nach Anspruch 1, wobei der Prozessor (160) ferner konfiguriert ist, um ein Initialisierungssignal an die Quellvorrichtung zu senden, wenn das Einschaltsignal empfangen wird, und zu identifizieren, ob das erste Signal innerhalb einer Referenzzeit empfangen wird, nachdem das Initialisierungssignal übertragen wurde.

6. Anzeigevorrichtung (100) nach Anspruch 5, wobei, wenn das erste Signal innerhalb der Referenzzeit empfangen wird und das erste Signal das vorbestimmte Bild nicht enthält, der Prozessor ferner konfiguriert ist, um die Referenzzeit basierend auf einer Zeitdauer aktualisiert, die vergeht, bis das erste Signal empfangen wird, nachdem das Initialisierungssignal übertragen wurde.

7. Anzeigevorrichtung (100) nach Anspruch 1, wobei die erste Kommunikationsschnittstelle ferner konfiguriert ist, um kommunikativ mit einer Vielzahl von Quellvorrichtungen verbunden zu werden, und
wobei der Prozessor ferner konfiguriert ist, um zu identifizieren, ob das erste Signal von einer ersten Quellvorrichtung empfangen wird, die als eine Stromeingangsquelle aus der Vielzahl von Quellvorrichtungen ausgewählt ist.

8. Anzeigevorrichtung (100) nach Anspruch 1, wobei der Prozessor ferner konfiguriert ist, um das Einschaltanforderungssignal, das Identifikationsinformationen enthält, die sich auf eine erste Quellvorrichtung beziehen, das als Stromeingangsquelle aus einer Vielzahl von Quellvorrichtungen ausgewählt ist, über die zweite Kommunikationsschnittstelle an die Fernsteuerungsvorrichtung zu übertragen.

9. Anzeigevorrichtung (100) nach Anspruch 1, wobei der Prozessor ferner konfiguriert ist, um das Einschaltanforderungssignal der Quellvorrichtung über die erste Kommunikationsschnittstelle an die Quellvorrichtung zu übertragen.

10. Steuerungsverfahren einer Quellvorrichtung (200) einer Anzeigevorrichtung (100), wobei das Verfahren Folgendes umfasst:
Empfangen eines Einschaltsignals der Anzeigevorrichtung (100);
Identifizieren, ob sich eine Quellvorrichtung (200) in einem eingeschalteten Zustand oder einem Standby-Zustand befindet, indem ein erstes von der Quellvorrichtung empfangenes Signal gegen einen Referenzwert analysiert wird, um zu bestimmen, ob das erste Signal ein vorbestimmtes Bild ist; und
Übertragen eines Einschaltanforderungssignals der Quellvorrichtung an die Quellvorrichtung (200) oder an ein Fernsteuerungsvorrichtung (300), wenn der Prozessor bestimmt, dass das erste Signal das vorbestimmte Bild enthält;
wobei das Identifizieren, ob das erste Signal das vorbestimmte Bild enthält, Folgendes umfasst:
Erfassen eines im ersten Signal enthaltenen Bildes;
Identifizieren von Pixelwerten von Pixeln, die in dem erfassten Bild enthalten sind; und
Bestimmen, dass das erste Signal das vorbestimmte Bild enthält, wenn die Pixelwerte des erfassten Bildes kleiner als der Referenzwert sind.

11. Verfahren nach Anspruch 10, wobei das Identifizieren, ob das erste Signal das vorbestimmte Bild enthält, Folgendes umfasst:
Überwachen eines Helligkeitswerts eines Bildes, das in dem ersten Signal enthalten ist; und
Bestimmen, dass das erste Signal das vorbestimmte Bild enthält, wenn der Helligkeitswert für eine vorbestimmte Zeitdauer kleiner als der Referenzwert ist.

12. Verfahren nach Anspruch 10, wobei das Identifizieren, ob das erste Signal das vorbestimmte Bild enthält, Folgendes umfasst:
Erfassen einer Vielzahl von Bildern, die in dem ersten Signal enthalten sind, während eines vorbestimmten Zeitraums;
Identifizieren von Pixelwerten von Pixeln, die in jedem Bild aus der Vielzahl von Bildern enthalten sind; und
Bestimmen, dass das erste Signal das vorbestimmte Bild enthält, wenn die Pixelwerte von mindestens einem Bild aus der Vielzahl von Bildern kleiner als der Referenzwert sind.

13. Verfahren nach Anspruch 10, wobei das Identifizieren, ob das erste Signal das vorbestimmte Bild enthält, Folgendes umfasst:
Identifizieren eines Ansteuersignals der Anzeigevorrichtung; und
Bestimmen, ob das erste Signal das vorbestimmte Bild enthält, basierend auf dem Ansteuersignal der Anzeigevorrichtung.

## Revendications

1. Dispositif d'affichage (100) comprenant :
une première interface de communication (110) configurée pour être connectée en communication avec un dispositif source (200) ;
une seconde interface de communication (120) configurée pour communiquer avec un dispositif de télécommande (300) ; et
un processeur (160) configuré pour recevoir un premier signal depuis le dispositif source (200) ;
**caractérisé en ce que**
lorsqu'un signal de mise sous tension du dispositif d'affichage (100) est reçu, le processeur (160) est configuré pour identifier si le dispositif source (200) est dans un état sous tension ou un état de veille en analysant le premier signal par rapport à une valeur de référence afin de déterminer si le premier signal comporte une image prédéterminée ;
dans lequel le processeur (160) est configuré pour transmettre au dispositif source (200) ou au dispositif de télécommande (300) un signal de demande de mise sous tension du dispositif source (200) lorsque le processeur (160) détermine que le premier signal comporte l'image prédéterminée,
dans lequel le processeur (160) est en outre configuré pour capturer une image incluse dans le premier signal, pour identifier des valeurs de pixel de pixels inclus dans l'image capturée, et pour déterminer que le premier signal comporte l'image prédéterminée lorsque les valeurs de pixel de l'image capturée sont inférieures à la valeur de référence.

2. Dispositif d'affichage (100) selon la revendication 1, dans lequel le processeur (160) est en outre configuré pour surveiller une valeur de luminosité d'une image incluse dans le premier signal et pour déterminer que le premier signal comporte l'image prédéterminée lorsque la valeur de luminosité est inférieure à la valeur de référence pendant une durée prédéterminée.

3. Dispositif d'affichage (100) selon la revendication 1, dans lequel le processeur (160) est en outre configuré pour capturer une pluralité d'images pendant une période de temps prédéterminée et pour déterminer que le premier signal comporte l'image prédéterminée lorsque des valeurs de pixel d'au moins une image parmi la pluralité d'images sont inférieures à la valeur de référence.

4. Dispositif d'affichage (100) selon la revendication 1, comprenant en outre :
un affichage (140),
dans lequel le processeur (160) est en outre configuré pour identifier un signal de commande de l'affichage et pour déterminer si le premier signal comporte l'image prédéterminée sur la base du signal de commande de l'affichage.

5. Dispositif d'affichage (100) selon la revendication 1, dans lequel le processeur (160) est en outre configuré pour transmettre un signal d'initialisation au dispositif source lorsque le signal de mise sous tension est reçu, et pour identifier si le premier signal est reçu dans les limites d'un temps de référence après la transmission du signal d'initialisation.

6. Dispositif d'affichage (100) selon la revendication 5, dans lequel, lorsque le premier signal est reçu dans les limites du temps de référence et que le premier signal ne comporte pas l'image prédéterminée, le processeur est en outre configuré pour mettre à jour le temps de référence sur la base d'une durée qui s'écoule jusqu'à ce que le premier signal soit reçu après la transmission du signal d'initialisation.

7. Dispositif d'affichage (100) selon la revendication 1, dans lequel la première interface de communication est en outre configurée pour être connectée en communication avec une pluralité de dispositifs source, et
dans lequel le processeur est en outre configuré pour identifier si le premier signal est reçu depuis un premier dispositif source qui est sélectionné comme source d'entrée de courant parmi la pluralité de dispositifs source.

8. Dispositif d'affichage (100) selon la revendication 1, dans lequel le processeur est en outre configuré pour transmettre le signal de demande de mise sous tension, qui comporte des informations d'identification qui se rapportent à un premier dispositif source qui est sélectionné comme source d'entrée de courant parmi une pluralité de dispositifs source, au dispositif de télécommande par l'intermédiaire de la seconde interface de communication.

9. Dispositif d'affichage (100) selon la revendication 1, dans lequel le processeur est en outre configuré pour transmettre le signal de demande de mise sous tension du dispositif source au dispositif source par l'intermédiaire de la première interface de communication.

10. Procédé de commande de dispositif source (200) d'un dispositif d'affichage (100), le procédé comprenant :
la réception d'un signal de mise sous tension du dispositif d'affichage (100) ;
le fait d'identifier si un dispositif source (200) est dans un état sous tension ou dans un état de veille en analysant un premier signal reçu depuis le dispositif source par rapport à une valeur de référence afin de déterminer si le premier signal est une image prédéterminée ; et
la transmission au dispositif source (200) ou à un dispositif de télécommande (300) d'un signal de demande de mise sous tension du dispositif source lorsque le processeur détermine que le premier signal comporte l'image prédéterminée,
dans lequel le fait d'identifier si le premier signal comporte l'image prédéterminée comporte :
la capture d'une image incluse dans le premier signal ;
l'identification de valeurs de pixel de pixels inclus dans l'image capturée ; et
le fait de déterminer que le premier signal comporte l'image prédéterminée lorsque les valeurs de pixel de l'image capturée sont inférieures à la valeur de référence.

11. Procédé selon la revendication 10, dans lequel le fait d'identifier si le premier signal comporte l'image prédéterminée comporte :
la surveillance d'une valeur de luminosité d'une image incluse dans le premier signal ; et
le fait de déterminer que le premier signal comporte l'image prédéterminée lorsque la valeur de luminosité est inférieure à la valeur de référence pendant une durée prédéterminée.

12. Procédé selon la revendication 10, dans lequel le fait d'identifier si le premier signal comporte l'image prédéterminée comporte :
la capture d'une pluralité d'images incluses dans le premier signal pendant une période de temps prédéterminée ;
l'identification de valeurs de pixel de pixels inclus dans chaque image parmi la pluralité d'images ; et
le fait de déterminer que le premier signal comporte l'image prédéterminée lorsque les valeurs de pixel d'au moins une image parmi la pluralité d'images sont inférieures à la valeur de référence.

13. Procédé selon la revendication 10, dans lequel le fait d'identifier si le premier signal comporte l'image prédéterminée comporte :
l'identification d'un signal de commande du dispositif d'affichage ; et
le fait de déterminer si le premier signal comporte l'image prédéterminée sur la base du signal de commande du dispositif d'affichage.
